# EUROPÄISCHE PATENTSCHRIFT

(11) **EP 1 251 990 B1**
(45) Veröffentlichungstag und Bekanntmachung des Hinweises auf die Patenterteilung: **22.10.2003**
(21) Anmeldenummer: 01901103.0
(22) Anmeldetag: 29.01.2001
(51) Int. Cl.: B23D 57/00

(54) **SEILSÄGE**
CABLE SAW
SCIE A CABLE

(30) Priorität: 31.01.2000 CH 184002000; 25.07.2000 CH 146600
(43) Veröffentlichungstag der Anmeldung: 30.10.2002
(73) Patentinhaber: HYDROSTRESS AG, CH-8330 Pfäffikon (CH)
(72) Erfinder: BIERI, Hans, CH-8330 Pfäffikon (CH)
(74) Vertreter: Rentsch, Rudolf A.
(86) Internationale Anmeldenummer: CH0100065
(87) Internationale Veröffentlichungsnummer: WO01056729

(56) Entgegenhaltungen:
- DE-U- 29 805 457

## Beschreibung

Die Erfindung betrifft eine Seilsäge wie sie z. Bsp. aus der WO 95/28263 bekannt ist.

Aus dem Stand der Technik sind Seilsägen bekannt, die ein endlos umlaufendes Seil aufweisen mittels dem Gestein, Beton, Mauerwerk, usw. getrennt werden können. Das beim Trennen freiwerdende Seil erfordert eine Speicherung. Dies wird z.B. dadurch gelöst, dass das freiwerdende Seil in einer Maschine gespeichert wird, indem der Abstand zwischen entsprechend angeordneten Umlenkrollen variiert wird. Mittels flaschenzugähnlich angeordneten Rollenbatterien ist eine sehr effiziente Seilspeicherung möglich, da mittels kleinen Bewegungen sehr viel Seil gespeichert werden kann.

Aus DE-U-298 05 157 ist eine Anordnung bekannt, welche zwei statisch angeordnete Rollenbatterien und ein grosses Antriebsrad aufweist. Die statisch angeordneten Rollenbatterien dienen zum manuellen Aufwickeln des freiwerdenden Seils. Die Antriebsleistung wird über das eine Antriebsrad auf das anzutreibende Seil übertragen. Die Länge des Seils wird durch eine entsprechende Verschiebung des Antriebsrades erreicht. Die aus DE'157 bekannte Anordnung baut sehr gross.

Aus DE-U-298 05 457 ist eine Seilsägevorrichtung bekannt, welche einen Seilspeicher mit zwei Rollenbatterien aufweist. Ausserhalb des Seilspeichers befindet sich ein Antriebsrad. Die Rollenbatterien weisen keinen aktiven Antrieb auf.

Aus WO95/18692 ist eine Sägevorrichtung bekannt. Diese weist mehrere Umlenkrollen auf, welche im Wesentlichen alle in einer Ebene angeordnet sind. Diese Anlage baut sehr gross und ist daher nicht für den Einsatz in beengten Platzverhältnissen geeignet. Der Antrieb wirkt an einem Ort konzentriert auf dass Sägeseil.

Von der selben Anmelderin ist aus PCT/CH94/00186 eine Seilsäge bekannt, die einen flaschenzugähnlichen Seilspeicher aufweist. Am Ein- und am Auslauf des Seilspeichers sind zwei Hydraulikmotoren angeordnet, welche zum Antreiben des Seils dienen. Die Antriebsrollen dieser Seilsäge sind wesentlich kleiner ausgebildet als bei DE'157.

Bei gewissen, aus dem Stand der Technik bekannten Anordnungen besteht die Problematik, dass es häufig zu Seilrissen des Sägeseils kommt. Insbesondere bei Anordnungen mit grossen Seilspeichern tritt diese Phänomen auf. Seilrisse sind gefährlich und teuer, da die Kontrolle über das Sägeseil verloren geht und dieses ersetzt oder repariert werden muss, während dem der Arbeitsprozess still steht. Bei den aus dem Stand der Technik bekannten Anordnungen, ist die Grösse des Seilspeichers in der Regel beschränkt. Aufgrund der wirkenden Kräfte sind diese Seilspeicher nicht beliebig erweiterbar. Die Sägeseile werden in der Regel zu stark beansprucht.

Es ist Aufgabe der hier offenbarten Erfindung eine Seilsäge zu zeigen, die Seilrisse und Überlastungen der Maschinenteile, insb. beim Anfahren, vermeidet.

Die hier offenbarte Erfindung beruht u.a. auf einem gezielten Management der Kräfte und deren Verteilung innerhalb einer Seilsägevorrichtung, insb. in einem Sägeseil. Es wird dabei bewusst eine verteilte Krafteinleitung ins Sägeseil angestrebt. Dadurch werden lokale Überlastungen und Überspannungen eliminiert. Die Philosophie der hier offenbarten Erfindung besteht u.a. darin, das Sägeseil abschnittweise und mit aufeinander abgestimmten Lasten anzutreiben. Kontrolliert einstellbare Normalkräfte auf das Seil innerhalb eines Seilspeichers erlauben eine optimale Traktion. Die Antriebsmittel und die von ihnen übertragene Antriebsleistung/geschwindigkeit sind bevorzugt individuell aufeinander abgleichbar. Eine Überlastung des Sägeseils, insb. beim Anfahren, wird somit vermieden und Sekundärspannungen verhindert. Die Erfindung ermöglicht es das Sägeseil, insb. beim Anfahren, kontrolliert in einen Schnitt zu leiten.

Im Gegensatz zur Bearbeitung von Naturstein muss beim Bau häufig mit einer suboptimalen Schnittgeometrie gearbeitet werden. Baukörper besitzen häufig einen mehr oder weniger inhomogenen Aufbau (Eisen, Hohlräume, Fremdmaterialien), was die Kontrolle des Bearbeitungsprozesses (Schnittvorganges) erschwert. Konventionelle Diamantseilsäge-Konzepte berücksichtigen diese Umstände nicht genügend. Um den sicheren und wirtschaftlichen Einsatz der Seilsägetechnik zu gewährleisten, ermöglicht es die Erfindung die Schnittbedingungen und damit die Spannungen im Seil aktiv zu kontrollieren. Besonders Vorteilhaft sind in diesem Zusammenhang verteilte Lasteinleitungen, ein Zwischenspeicherkonzept, sowie ein adaptives Vorschubsystem.

Beim Betrieb einer erfindungsgemässen Seilsägevorrichtung werden grundsätzlich zwei Betriebsarten unterschieden: Das Anfahren (Hochfahren) sowie das Sägen. Um z.B. grosse Schnitte mit langen Seilen oder schwierige Schnittgeometrien mit vielen Ecken und Kanten zu beherrschen, spielt insbesondere das Anfahren eine sehr wichtige Rolle. Zu diesem Zweck verwendet die hier offenbarte Erfindung bevorzugt eine verteilte Lasteinleitung ins Sägeseil, ein Zwischenspeicherkonzept und ein adaptives Vorschubsystem welches die Betriebsart "Sägen" vereinfacht. Die eingeleiteten Lasten werden mittels Ausgleichsmitteln aufeinander abgestimmt und koordiniert.

Beim Anfahren des Sägeseils ist eine zuverlässige Seilführung unerlässlich, da die Seilführungen "offen" sind und ein loses Seil von einer Rolle springen kann. Beim Anfahren entstehen auch Normalkräfte im Schnitt, da das Seil z.B. um Kanten und andere Hindernisse bewegt werden muss. Diese Normalkräfte sind in dieser Phase nachteilhaft, können aber wegen der Umschlingung in der Regel nicht vermieden werden. Erforderliche Anfahrmomente und die daraus folgenden Seilspannungen sind, insbesondere bei konventionellen Lösungen wesentlich grösser als im effektiven Sägebetrieb. Dies ist insb. eine Folge der beim Anfahren noch vorhandenen kleinen Radien, die punktuell zu grossen Normalkräften und entsprechend grossen Reibkräften führen können. Konventionelle Seilsägen sind daher in der Lage nur bei Umschlingung von maximal zwei oder drei "Ecken" anzufahren. Systeme, die für eine genügende Traktion hohe Vorspannkräfte verlangen, können nicht an die Schnittverhältnisse angepasst werden. Dies führt zu übermässigem Seilverschleiss und erhöht das Risiko von Seilbrüchen.

Um einen kompakten Aufbau einer Seilsäge zu erzielen, ist es erforderlich, das sich nicht im Schnitt befindende Sägeseil platzsparend zu speichern. In der hier offenbarten Erfindung wird deshalb bevorzugt ein aktiv angetriebener Seilspeicher verwendet, der z.B. aus parallel angeordneten Wellen besteht, auf denen mehrere nebeneinanderliegende Rollen angeordnet sind, derart, dass das Sägeseil die Rollen des Seilspeichers fortlaufend umschlingt. Der Abstand gewisser Wellenachsen ist vorzugsweise kontinuierlich einstellbar, so, dass das Speichervolumen des Seilspeichers und auch das Übersetzungsverhältnis des Vorschubs veränderbar ist. Die nebeneinander liegenden Rollen werden vorteilhafter Weise so angeordnet, dass sie von einer Seite her frei zugänglich sind, so dass ein geschlossenes Seil in Schlaufen aufbringbar ist, ohne dass das Seil geöffnet werden muss. Die Rollen des Seilspeichers werden mit Vorteil nicht in einer Ebene angeordnet, da eine entsprechende Anordnung der erzielbaren Effizienz entgegenwirken kann. Der Antrieb des Seilspeichers erfolgt in der Regel über mehrere im Bereich (innerhalb) des Seilspeichers angeordnete Rollen. Diese Rollen sind dabei untereinander über Ausgleichsmittel derart wirkverbunden, dass sie eine variable Verteilung der Antriebsleistung ermöglichen und ausgleichen. Insbesondere sind unterschiedliche Geschwindigkeiten des Sägeseils während dem Übertragen der Antriebsleistung ausgleichbar. Im Bereich des Seilspeichers sind falls erforderlich zusätzliche Mittel vorgesehen, die zur aktiven Kontrolle des Sägeseils dienen. Es handelt sich hierbei bevorzugt um Mittel zur Messung und Kontrolle der Seilspannung, bspw. Seilbremsen, usw. Die einzelnen Antriebsmittel sind aufeinander abstimmbar, derart, dass die Seilspannung inner- und ausserhalb des Seilspeichers, insbesondere beim Anfahren, gezielt kontrollierbar und einstellbar ist.

Im Unterschied zu den aus dem Stand der Technik bekannten Anordnungen wird das Sägeseil bei der hier offenbarten Erfindung an mehreren Stellen entlang seiner Länge und zwischen mechanischen Widerständen angetrieben. Dadurch wird eine lokale Überlastung des Sägeseils und die damit verbundenen Verschleisserscheinungen oder gar Seilbrüche vermieden. Insbesondere beim Anfahren einer erfindungsgemässen Seilsägevorrichtung, treten die üblicher Weise auftretenden hohen Kräfte nicht auf. Die Belastung der einzelnen Antriebspunkte kann bedarfsgerecht eingestellt werden, derart, dass eine optimale Traktion erreicht wird. Insbesondere beim Einführen des Seils in den Schnitt. Dies wird insbesondere dadurch erreicht, indem optimale Seilspannung im freien Sägeseil beim Hochfahren und eine adaptive Seilspannung beim Sägen ermöglicht wird. Verfahrensmässig gesehen, werden lokal unterschiedliche Geschwindigkeiten in einem Sägeseil einer Seilsägevorrichtung, mit mehreren antreibenden Seilumlenkrollen, dadurch ausgeglichen, dass Kräfte von schneller laufenden Seilabschnitten auf langsamer laufende Seilabschnitte übertragen werden.

Herkömmliche Systeme verlangen vom Bediener, dass er beim Hochfahren einen Kompromiss findet zwischen möglichst geringen Normalkräften im Schnitt (freies Sägeseil) und dennoch hoher Traktion im Antrieb. Ist die Spannung im Sägeseil nämlich zu hoch, reicht die Traktion im Antriebssystem nicht aus um ein Anfahren zu ermöglichen. Ist sie zu tief, so besteht die Gefahr, dass einerseits die Seilführung unzuverlässig ist und andererseits der Antrieb unzulässig viel Schlupf aufweist. Der Bediener muss während des Hochfahrens die Seilspannung also sorgfältig beobachten und justieren. Bei der hier offenbarten Erfindung werden Kräfte verteilt an mehreren Stellen ins Sägeseil eingeleitet. Maximallasten sind falls gewünscht über geeignete Mittel gezielt einstellbar. Vorteilhaft ist beispielsweise die Verwendung von einstellbaren Rutschkupplungen, zur Lastbegrenzung. Der hier verwendete Mehrfachrollenantrieb ermöglicht, selbst bei Verwendung eines Seilspeichers, ein weitgehend spannungsfreies Einlaufen des Sägeseils in den Schnitt. Normalkräfte im Schnitt werden dadurch gering und das benötigte Anfahrmoment klein gehalten. Falls erforderlich kann durch ein gezieltes "Einspannen" des Sägeseils im Antriebssystem eine optimale Traktion der Antriebsräder erzielt werden. Bei Bedarf wird das Sägeseil vor dem Einlaufen in den Seilspeicher verzögert, derart dass eine erhöhte Traktion im Seilspeicher (Antrieb) erreicht wird. Hierfür eignet sich bspw. eine oder mehrere, federnd gelagerte Rollen (Anpressrollen, Jockeyrollen) besonders gut, welche z.B. beim Auflaufen des Sägeseils eine Normalkraft ausübt, um einen Spannungsabbau zu erlauben. Die Bedienung des Antriebssystems wird somit stark vereinfacht, da schon eine kontrolliert geringe Vorspannung des Seils im Schnitt eine zuverlässige Seilführung während des Hochfahrens ermöglicht. Diese Vorspannung kann vor dem Hochfahren definiert werden.

Während dem Sägeprozess treten häufig Lastschwankungen am Sägeseil auf. Gründe hierfür sind ein inhomogener Aufbau des Baukörpers (Stahlstrukturen, Hohlräume), Änderungen in der Schnittgeometrie, Änderung in der Abrasivität im Schnitt, inhomogenes Sägeseil (unterschiedlich abgenützte, zusammengesetzte Seilstücke). Die hier offenbarte Erfindung weist einen bevorzugt adaptiven Charakter auf. Die Erfindung ist so konzipiert, dass die Seilspannung und damit die Normalkräfte im Schnitt möglichst konstant gehalten werden, so dass grosse Lastwechsel und Spannungsspitzen vermieden werden. Grundlage hierfür bildet u.a. ein Seilstrecker, auch Vorschubsystem genannt, die keine signifikante Selbsthemmung aufweisen. Dabei kommen bevorzugt hydraulische und pneumatische Systeme zum Einsatz. Hydraulischen Systeme weisen zu dem den Vorteil einer höheren passiven Sicherheit auf, da sie bei einem Seilbruch keine Speicherenergie auf den Seilstrecker übertragen. Dadurch wird verhindert, dass das Sägeseil nicht unnötig nachgezogen wird.

Die Länge des arbeitenden Sägeseils kann durch den Abstand der Wellen der mit Vorteil seitlich nebeneinander angeordneten Seilumlenkrollen bestimmt werden. Bestimmte Seilumlenkrollen übertragen Antriebskräfte auf das Sägeseil. Diese Rollen können auf ein und der selben oder auf unterschiedlichen Wellen angeordnet sein. Insbesondere können sie von demselben oder von unterschiedlichen Antriebsmittel angetrieben werden. Die antreibenden Mittel sind bevorzugt entlang des Sägeseils voneinander in regelmässigen oder unregelmässigen (unterdrücken von allfälligen Schwingungen) Abständen angeordnet, so dass die Antriebsleistung schonend und kontinuierlich auf das Sägeseil übertragen wird. Im Unterschied zum Stand der Technik sollen die mehreren Antriebsrollen bevorzugt zwischen mechanischen Widerständen angeordnet sein.

Infolge einer Veränderung der freien Seillänge ist es erforderlich, dass das Seil im Seilspeicher eine Ausgleichsbewegung vollführt, um zu vermeiden, dass sich schädliche Sekundärspannungen (Schnürspannungen) aufbauen. Dabei ist es besonders wichtig, dass die involvierten Seilumlenkrollen diese Ausgleichsbewegung zulassen. Aus diesem Grund sind die antreibenden Umlenkrollen derart ausgebildet, resp. miteinander wirkverbunden, dass sie eine entsprechende Ausgleichsbewegung nicht behindern. Durch die Erfindungsgemässe Anordnung der Antriebsrollen und ihre Wirkverbindung wird u.a. vermieden, dass die Antriebsleistung nicht unkontrolliert auf das Sägeseil übertragen wird. Die hier offenbarte Erfindung weist bei Bedarf Mittel zur Kontrolle und zum Ausgleichen von unterschiedlichen Seilspannungen auf. Seilspannungen werden an bestimmten Bereichen gezielt ab- oder aufgebaut. Besonders vorteilhaft sind die Bereiche bevor das Sägeseil in einen Seilspeicher einläuft, im Innern des Seilspeichers, oder beim Auslauf aus dem Seilspeicher, resp. beim Einlauf in einen Schnitt.

Die hier offenbarte Erfindung beruht u.a. auf der Erkenntnis, dass ein Ausgleich in einem Seilspeicher mit den auf ein Sägeseil wirkenden mehreren Antriebsmitteln koordiniert sein muss. Eine entsprechende Ausgleichsbewegung wird auf unterschiedliche Art und Weise realisiert. Die Grösse des Seilspeichers der hier offenbarten Erfindung ist, im Unterschied zu den aus dem Stand der Technik bekannten Seilspeichern, nicht begrenzt. Mehr als zwei Antriebsrollen stellen kein Problem dar. Aufgrund der verteilten Lasteinleitung und der aufeinander abgestimmten Kopplung der antreibenden Antriebsrollen, sowie deren Anordnung, werden die aus dem Stand der Technik bekannten Probleme gezielt vermieden. Ausserdem lassen sich mittels der hier offenbarten Erfindung kompakte Seilspeicher beliebiger Grösse realisieren.

Eine bevorzugte Ausführungsform einer erfindungsgemässen Seilsägevorrichtung, mit einem Sägeseil weist einen Seilspeicher zur Aufnahme eines Sägeseils auf. Dieser besteht aus mehreren Seilumlenkrollen, wobei mindestens zwei dieser Seilumlenkrollen einen veränderbaren Abstand zueinander aufweisen. Dadurch lässt sich die Länge des in der Seilsägevorrichtung umgelenkten Sägeseils verändern. Ein Motor treibt das Sägeseil über mehrere Seilumlenkrollen an. Lokal unterschiedliche Geschwindigkeiten des Sägeseils werden zwischen den mehreren antreibenden Seilumlenkrollen durch Ausgleichsmittel ausgeglichen.

Die Erfindung wird anhand der nachfolgenden Figuren näher erläutert. Es zeigen:
- Figur 1: schematisch eine Seilsägevorrichtung in perspektivischer Ansicht;
- Figur 2: zeigt schematisch die Seilsägevorrichtung gemäss Figur 1 mit einem erweiterten Seilspeicher;
- Figur 3: zeigt schematisch einen möglichen Spannungsverlauf eines Sägeseils beim Sägen;
- Figur 4: zeigt schematisch einen möglichen Spannungsverlauf eines Sägeseils beim Anfahren (Hochfahren).

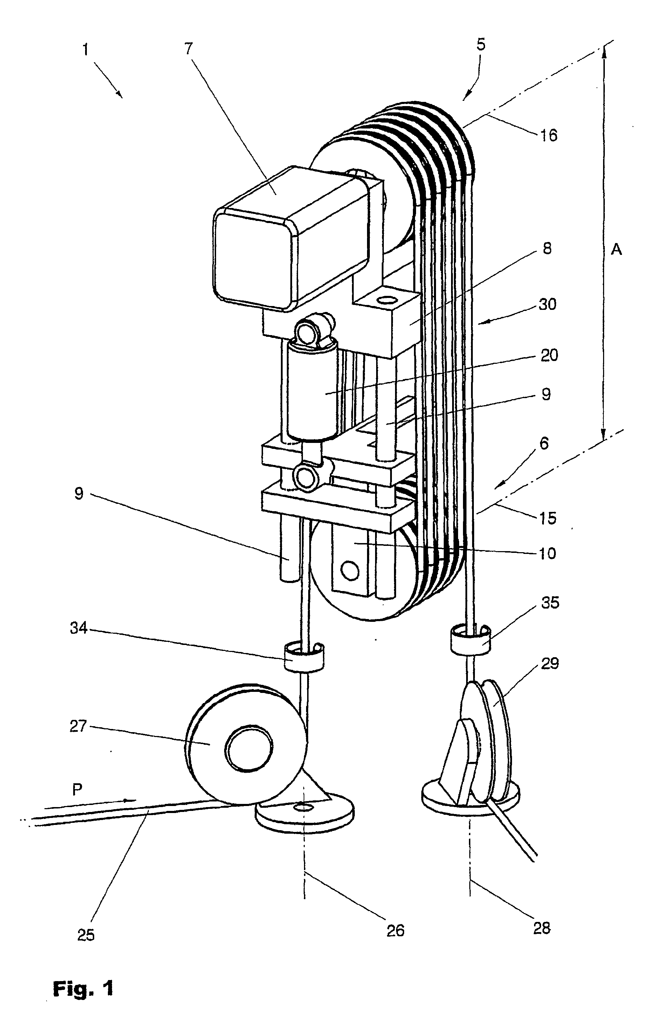

**Figur 1** zeigt schematisch eine bevorzugte Ausführungsform einer erfindungsgemässen Seilsägevorrichtung 1. Zu erkennen sind eine erste Rollenbatterie 5, eine zweite Rollenbatterie 6 und ein Motor 7, der an eine erste Haltevorrichtung 8 befestigt ist. Die Rollenbatterien 5, 6 bestehen hier aus mehreren axial nebeneinander liegenden Rollen. Die erste Rollenbatterie 5 besteht hier aus sechs Rollen, welche mit einer Antriebsachse (nicht näher dargestellt) des Motors 7 wirkverbunden sind.

Die erste Haltevorrichtung 8 weist hier zwei Holme 9 auf, entlang denen eine zweite Haltevorrichtung 10 verschiebbar gelagert ist. Die zweite Rollenbatterie 6 ist an der zweiten, verschiebbaren Haltevorrichtung 10 befestigt, derart dass die Rollen der zweiten Rollenbatterie 6 um eine erste Achse 15 frei drehbar sind. Die Rollen der ersten Rollenbatterie 5 sind hier auf einer zweiten Achse 16 angeordnet, die im wesentlichen mit der Antriebsachse (nicht näher dargestellt) des Motors 7 fluchtet. Die erste und die zweite Achse 15, 16 sind hier im Wesentlichen parallel angeordnet. Ein Hydraulikzylinder 20, der mit der ersten und mit der zweiten Haltevorrichtung 8, 10 wirkverbunden ist, dient zur Bestimmung und Veränderung eines Abstandes A zwischen der ersten und der zweiten Rollenbatterie 5, 6, insb. während eines Schnittvorgangs.

Ein Sägeseil 25 erstreckt sich hier von einer ersten, um eine dritte Achse 26 schwenkbaren Umlenkrolle 27, über die Rollen der ersten 5 und der zweiten Rollenbatterie 6 und über eine zweite, um eine vierte Achse 28 schwenkbare Umlenkrolle 29. Die erste und die zweite Rollenbatterie 5,6 wirken als ein Seilspeicher 30, der zur Aufnahme des freiwerdenden Sägeseils 25, insb, während eines Schnittvorgangs dient. Durch eine Veränderung des Abstandes A und die Anzahl Umschlingungen des Sägeseils 25 im Seilspeicher 30 kann die Länge des sich in einem Schnitt (nicht näher dargestellt) befindlichen Sägeseils 25 definiert werden. Durch die Kraft und die Geschwindigkeit mit der Abstand A verändert wird, wird die Seilspannung (Grundspannung) und die Schnittgeschwindigkeit eingestellt.

Die Rollenbatterien 5, 6 sind derart angeordnet, dass das Seil (bei stillstehender Vorrichtung) frei zugänglich im Seilspeicher anbringbar ist. Seilführungsmittel, hier in Form von einer ersten 34 und einer zweiten Öse 35 sind ebenfalls so ausgebildet, dass das Sägeseil 25 frei zugänglich anbringbar ist. Die zweite Umlenkrolle 29 und die zweite Öse 35 sind derart angeordnet, dass sie bei Bedarf in Richtung der ersten Achse 15 verschiebbar sind. Dies ermöglicht es, dass nicht alle Windungen im Seilspeicher besetzt sein müssen.

Das Sägeseil 25, welches die Seilsägevorrichtung 1 hier in Richtung eines Pfeils P durchläuft, wird durch den Motor 7 über die erste Rollenbatterie 5 angetrieben. Die Rollen der Rollenbatterie 5 sind dabei nicht starr mit dem Motor 7 verbunden, sondern weisen, insb. untereinander Wirkverbindungen auf, welche individuelle Seilgeschwindigkeiten und die damit verbundenen allfälligen Drehzahlunterschiede und unterschiedliche Kraftübertragungen ermöglichen. Insbesondere bei einer Veränderung der Länge des Sägeseils ist es erforderlich, dass Relativbewegungen zulässig sind. Die Wirkverbindungen zwischen den Rollen der ersten Rollenbatterie sind derart ausgebildet, dass die auf das Sägeseil 25 übertragenen Kräfte nicht an einem Ort konzentriert eingeleitet werden. Durch die Erfindungsgemässe Ausgestaltung ist es viel mehr möglich, die Kräfte bedarfsgerecht zu übertragen.

Beim Anfahren ist es bei Bedarf möglich die Kräfte in dem Teil des Sägeseils 25, der sich im Innern des Seilspeichers 30 befindet, gezielt zu erhöhen, während dem die Kräfte des sich im Schnitt befindenden Teils des Sägeseil 25 entsprechend tiefer sind. Dadurch wird eine erhöhte Traktion, bei gleichzeitig optimaler Belastung des Sägeseils erreicht. Vorteilhaft ist, z.B. insbesondere beim Anfahren, wenn gewisse Elemente zur Erhöhung der Traktion kontrolliert gebremst werden. Bei der hier gezeigten Ausführungsform kann dies beispielsweise durch ein Bremsen der ersten Führungsrolle 27 erreicht werden. Äquivalent können auch andere Mittel eingesetzt werden.

In die Wirkverbindungen zwischen den Rollen der Rollenbatterie 5 untereinander und dem Motor 7 kann beispielsweise ein Freilauf verwendet werden, der unterschiedliche Seilgeschwindigkeiten zulässt. Vorteilhaft sind Mittel zur Ausgleichung von unterschiedlichen Seilgeschwindigkeiten, resp. Seilkräfte. Solche Mittel bestehen beispielsweise aus Ausgleichsgetrieben (Differentialgetriebe), Rutschkupplungen, hydraulischen Kupplungen (Viskokupplungen) oder unterschiedlichen, angepasste Rollendurchmesser. Die Maximalkräfte des Sägeseils 25 werden bevorzugt über lastbegrenzende Elemente, bspw. in der Form von Rutschkupplungen, kontrolliert. Schwingungen und Lastspitzen werden effizient gedämpft. Um Drehzahlunterschiede zu kompensieren können die Rollen der Rollenbatterien 5,6 bei Bedarf entsprechend angepasste unterschiedliche Durchmesser aufweisen. Die Umlenkrollen 5, 6, 27, 29 werden falls erforderlich mittels Wasser gekühlt, resp. gereinigt, um einen optimalen Betrieb zu garantieren.

Der Antrieb des Sägeseils 25 kann über einen oder mehrere Motoren 7 erfolgen. Als Motoren 7 kommen bevorzugt Hydraulik- oder Elektromotoren zum Einsatz, welche bevorzugt beabstandet entlang des Seils wirkend angeordnet sind, um eine verteilte Lasteinleitung zu garantieren. Diese sind derart miteinander wirkverbunden, dass unterschiedliche Geschwindigkeiten in der Seilgeschwindigkeit einstellbar, resp. ausgleichbar sind. Bei Hydraulikmotoren ist dies beispielsweise über entsprechende Ventile steuerbar, welche Einfluss auf die Volumenströme in der Hydraulik nehmen.

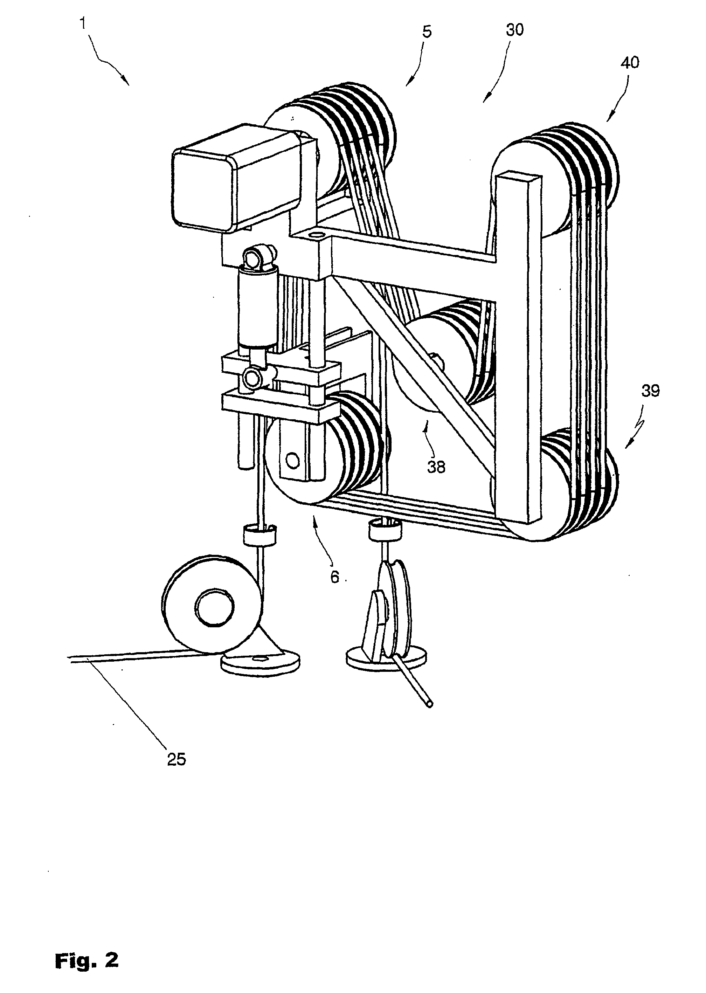

**Figur 2** zeigt die Seilsägevorrichtung 1 gemäss Figur 1 mit einem erweiterten Seilspeicher 30. Der Seilspeicher 30 weist hier zusätzlich drei weitere Rollenbatterien 38, 39, 40 auf. Diese Rollenbatterien sind derart angeordnet, dass sie eine flexible Einstellung der Länge des Sägeseils 25 ermöglichen. Die Rollen sind hier von einer Seite frei zugänglich, derart, dass eine einfache Handhabung des Sägeseils garantiert wird. Wie dargestellt, ist es nicht erforderlich, dass alle Rollen besetzt sind. Bei Bedarf kann der Seilspeicher 30 entsprechend erweitert werden. Die Rollenbatterien 6, 38, 39, 40 können bei Bedarf zusätzlich Mittel zu Kontrolle und Überwachung der Seilspannung aufweisen, resp. Mittel zum Antreiben des Sägeseils 25. Besonders geeignet sind sogenannte Jockey-Rollen, welche eine adaptive Kontrolle und Glättung der Seilspannung ermöglichen. Es handelt sich hierbei um federnd angeordnete Rollen, welche sich der Seilspannung anpassen. Diese können bei Bedarf zusätzlich verzögernd wirken. Die Seilführung kann falls erforderlich durch entsprechende Mittel weiter ergänzt und kontrolliert werden.

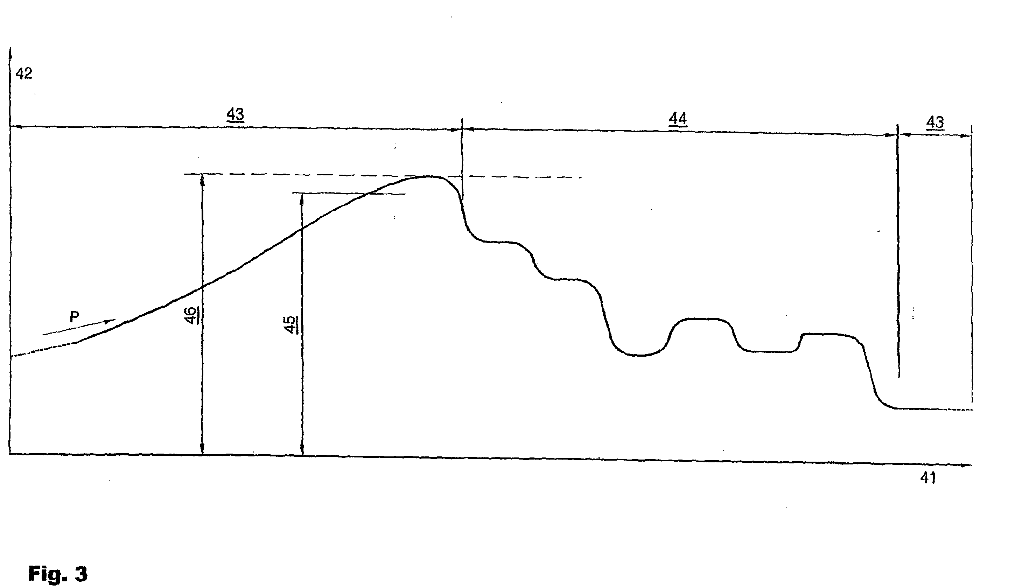

Figur 3 zeigt schematisch einen möglichen Spannungsverlauf eines Sägeseils 25 in einem Schnittbereich 43 und im Bereich 44 eines Seilspeichers 30. Auf einer Abszisse 41 ist schematisch die Länge eines Sägeseils 25 abgebildet und auf einer Ordinate 42 die im Sägeseil herrschenden Kräfte. Wie zu erkennen ist, nehmen die Kräfte im Schnittbereich 43 bis auf ein Höchstwert 45 zu und werden anschliessend im Bereich 44 eines Seilspeichers, bspw. über Schlupf mit dafür vorgesehenen Mitteln kontrolliert abgebaut. Mittel zur Beschränkung der maximal zulässigen Kräfte innerhalb eines Sägeseils bestehen beispielsweise aus Rutschkupplungen, hydraulischen Kupplungen, elektrischen Mitteln (Strombegrenzer), Gleitreibungszahl der beteiligten Materialien (Rolle, Seil), usw.. Sie sind gezielt einstellbar und beschränken die maximal mögliche Belastung auf einen Grenzwert 46. Dieser ist derart gewählt, dass keine zu hohen Beanspruchungen des Sägeseils oder der Seilsägevorrichtung auftritt.

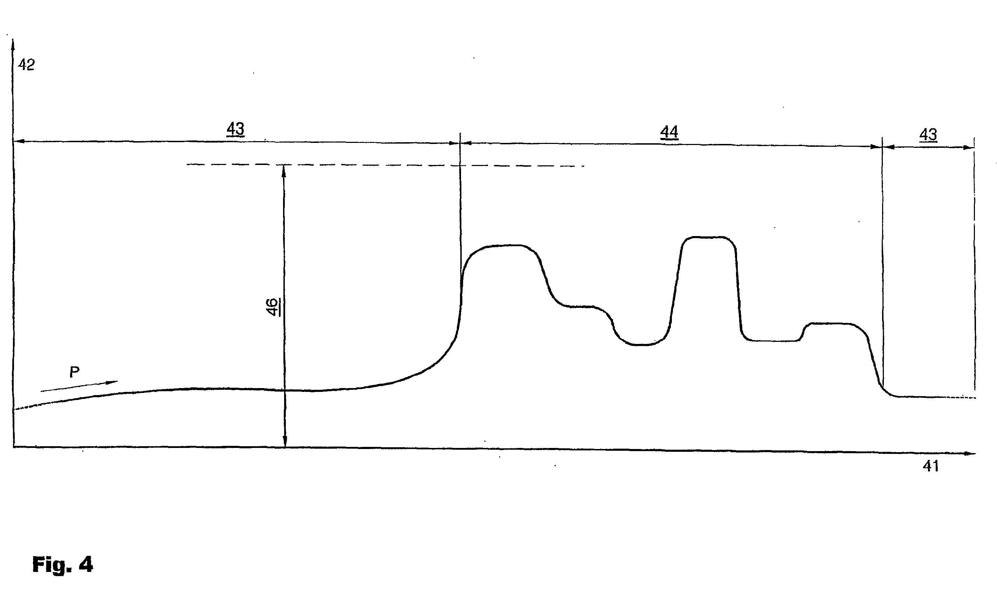

**Figur 4** zeigt schematisch einen möglichen Kräfte-, resp. Spannungsverlauf eines Sägeseils 25 in einem Schnittbereich 43 und im Bereich 44 eines Seilspeichers 30 während dem Hochfahren (Anfahren). Auf einer Abszisse 41 ist schematisch die Länge eines Sägeseils 25 abgebildet und auf einer Ordinate 42 die im Sägeseil herrschenden Kräfte. Wie zu erkennen ist, sind die Kräfte in einem Schnittbereich 43, im Vergleich zum Bereich 44 eines Seilspeichers 30, gering. Dadurch wird die Traktion innerhalb des Seilspeichers 30 wesentlich erhöht. Die Kräfte im Sägeseil 25 sind beim Anfahren im Schnittbereich 43 gering, was die auf das Sägeseil 25 wirkenden Belastungen minimiert. Die Spannungen im Sägeseil 25 werden hier im Bereich des Einlaufs des Sägeseils in den Seilspeicher 30 gezielt, bspw. mittels einer gebremsten Rolle (u.a. Jockey-Rolle) oder einem anderen Mittel, erhöht. Nach erreichen des Betriebszustands "Sägen" wird diese Verzögerung abgeschaltet.

## Patentansprüche

1. Seilsägevorrichtung (1) mit einem Seilspeicher (30), zur Aufnahme eines Sägeseils (25), mit einer ersten und einer zweiten Rollenbatterie (5, 6) mit mehreren axial nebeneinander angeordneten Seilumlenkrollen, wobei die erste und die zweite Rollenbaterie (5, 6) zueinander in einem veränderbaren Abstand (A) angeordnet sind, so, dass die Länge des im Seilspeicher (30) gespeicherten Sägeseils (25) beim Sägeprozess einstellbar ist, wobei mehrere Seilumlenkrollen (5) des Seilspeichers (30) angetrieben sind, derart, dass die Antriebskräfte verteilt ins Sägeseil (25) eingeleitet werden und unterschiedliche Seilspannungen (P), respektive Seilgeschwindigkeiten im Sägeseil (25) zwischen den antreibenden Seilumlenkrollen (5), die sich als Folge einer Veränderung des Abstands (A) zwischen den beiden Rollenbatterien (5, 6) ergeben, durch Ausgleichsmittel ausgeglichen werden.

2. Seilsägevorrichtung (1) gemäss Patentanspruch 1, **dadurch gekennzeichnet, dass** die antreibenden Seilumlenkrollen (5) über mindestens ein Ausgleichsmittel wirkverbunden sind, derart dass unterschiedliche Seilspannungen (P), respektive Seilgeschwindigkeiten im Sägeseil (25) zwischen den antreibenden Seilumlenkrollen (5) ausgeglichen werden.

3. Seilsägevorrichtung (1) gemäss Patentanspruch 2, **dadurch gekennzeichnet, dass** das Ausgleichsmittel eine Rutschkupplung, eine hydraulische Kupplung, eine Freilaufkupplung oder ein Ausgleichsgetriebe ist.

4. Seilsägevorrichtung (1) gemäss einem der vorangehenden Patentansprüche, **dadurch gekennzeichnet, dass** die Seilumlenkrollen (5) einer Rollenbatterle (5) über einen Motor (7) angetrieben werden.

5. Seilsägevorrichtung (1) gemäss einem der vorangehenden Patentsansprüche, **dadurch gekennzeichnet, dass** die Rollen der Rollenbatterien (5, 6) von einer Seite frei zugänglich sind, derart, dass ein geschlossenes Sägeseil (25) in Schlaufen aufbringbar ist.

6. Seilsägevorrichtung (1) gemäss einem der vorangehenden Patentansprüche, **gekennzeichnet durch,** mehr als zwei Rollenbatterien (5, 6, 38, 39, 40).

7. Seilsägevorrichtung (1) gemäss einem der vorangehenden Patentansprüche, **dadurch gekennzeichnet, dass** das Vorschubsystem (20), welches den Abstand (A) zwischen den Rollenbatterien (5, 6) verändert, adaptiv ausgestaltet ist.

8. Seilsägevorrichtung (1) gemäss einem der vorangehenden Patentansprüche, **dadurch gekennzeichnet, dass** das Sägeseil (25) im Seilspeicher (30) eingespannt wird, derart, dass insbesondere beim Anfahren, eine optimale Traktion der antreibenden Umlenkrollen (5) resultiert.

9. Seilsägevorrichtung (1) gemäss Patentanspruch 8, **dadurch gekennzeichnet, dass** eine Seilumlenkrolle eine Bremse aufweist, derart, dass die Traktion im Seilspeicher (30) erhöht wird.

10. Seilsägevorrichtung (1) gemäss einem der vorangehenden Patentansprüche, **gekennzeichnet durch,** eine Jockey-Rolle die zur adaptiven Kontrolle und Glättung der Seilspannungen (P) dient.

## Claims

1. Cable saw device (1) comprising a cable storage device (30) for holding a sawing cable (25), comprising a first and a second roller group (5, 6) having a plurality of cable deflection rollers arranged axially side by side, the first and the second roller groups (5, 6) being arranged a variable distance (A) apart so that the length of the sawing cable (25) stored in the cable storage device (30) is adjustable during the sawing process, a plurality of cable deflection rollers (5) of the cable storage device (30) being driven in such a way that the drive forces are introduced in a distributed manner into the sawing cable (25) and different cable tensions (P) or cable speeds in the sawing cable (25) between the driving cable deflection rollers (5), which result from a change in the distance (A) between the two rollers groups (5, 6) are compensated by compensating means.

2. Cable saw device (1) according to Patent Claim 1, **characterized in that** the driving cable deflection rollers (5) are operatively connected by at least one compensating means in such a way that different cable tensions (P) or cable speeds in the sawing cable (25) between the driving cable deflection rollers (5) are compensated.

3. Cable saw device (1) according to Patent Claim 2, **characterized in that** the compensating means is a friction clutch, hydraulic clutch, a overrunning clutch or a differential gear.

4. Cable saw device (1) according to any of the preceding Patent Claims, **characterized in that** the cable deflection rollers (5) of a roller group (5) are driven by means of a motor (7).

5. Cable saw device (1) according to any of the preceding Patent Claims, **characterized in that** the rollers of the roller groups (5, 6) are freely accessible from one side so that a closed sawing cable (25) can be mounted in loops.

6. Cable saw device (1) according to any of the preceding Patent Claims, **characterized by** more than two roller groups (5, 6, 38, 39, 40).

7. Cable saw device (1) according to any of the preceding Patent Claims, **characterized in that** the advance system (20) which changes the distance (A) between the roller groups (5, 6) is adaptively designed.

8. Cable saw device (1) according to any of the preceding Patent Claims, **characterized in that** the sawing cable (25) is clamped in the cable storage device (30) in such a way that, particularly during startup, optimum traction of the driving deflection rollers (5) results.

9. Cable saw device (1) according to Patent Claim 8, **characterized in that** a cable deflection roller has a brake so that the traction in the cable storage device (30) is increased.

10. Cable saw device (1) according to any of the preceding Patent Claims, **characterized by** a jockey roller which serves for adaptive control and smoothing of the cable tensions (P).

## Revendications

1. Dispositif de scie de câble (1) avec un magasin de câble (30), pour l'accueil d'un câble de scie (25), avec une première et une deuxième batterie de poulies (5, 6) avec plusieurs poulies de renvoi de câble disposées axialement l'une a côté de l'autre, sachant que la première et la deuxième batterie de poulies (5, 6) sont disposées à une distance variable (A) l'une de l'autre, de manière à ce que la longueur du câble de scie (25) stockée dans le magasin de câble (30) est réglable pendant le processus de sciage, sachant que plusieurs poulies de renvoi de câble (5) du magasin de câble (30) sont propulsées, de telle manière que les forces motrices soient transmises de façon répartie dans le câble de scie (25) et que des tensions de câbles différentes (P) ou des vitesses de câble différentes du câble de scie (25) entre les poulies motrices de renvoi de câble (5), qui résultent de la modification de la distance (A) entre les deux batteries de poulies (5, 6), soient compensées par des moyens de compensation.

2. Dispositif de scie de câble (1) selon la revendication 1, **caractérisé en ce que** les poulies motrices d'entraînement de câble (5) sont couplées par une liaison mécanique par au moins un moyen de compensation, de telle manière que des tensions de câbles différentes (P) ou des vitesses de câble différentes du câble de scie (25) entre les poulies motrices de renvoi de câble (5) soient compensées.

3. Dispositif de scie de câble (1) selon la revendication 2, **caractérisé en ce que** le moyen de compensation est un embrayage de glissement, un embrayage hydraulique, un embrayage de roue libre ou un engrenage compensateur.

4. Dispositif de scie de câble (1) selon l'une des revendications précédentes, **caractérisé en ce que** les poulies de renvoi de câble (5) d'une batterie de poulies sont propulsées par un moteur (7).

5. Dispositif de scie de câble (1) selon l'une des revendications précédentes, **caractérisé en ce que** les poulies des batteries de poulies (5, 6) sont librement accessibles sur un côté, de telle manière qu'un câble de scie fermé (25) peut être posé dans les circuits fermés.

6. Dispositif de scie de câble (1) selon l'une des revendications précédentes **caractérisé par** plus de deux batteries de poulies (5, 6, 38, 39, 40).

7. Dispositif de scie de câble (1) selon l'une des revendications précédentes, **caractérisé en ce que** le système de mouvement d'avance (20) qui modifie la distance (A) entre les batteries de poulies (5, 6), est réalisé de façon adaptive.

8. Dispositif de scie de câble (1) selon l'une des revendications précédentes, **caractérisé en ce que** le câble de scie (25) est tendu dans le magasin de câble (30), de telle manière qu'il en résulte une traction optimale des poulies motrices de renvoi de câble (5), notamment au moment du démarrage.

9. Dispositif de scie de câble (1) selon la revendication 8, **caractérisé en ce que** l'une des poulies de renvoi de câble comporte un frein, de telle manière qu'il se produit une augmentation de la traction dans le magasin de câble (30).

10. Dispositif de scie de câble (1) selon l'une des revendications précédentes, **caractérisé par** une poulie jockey qui sert au contrôle et au lissage adaptés des tensions de câble (P).
